## Europäisches Patentamt

## European Patent Office

## Office européen des brevets

(19)

(11) Veröffentlichungsnummer: **0 198 115**
**B1**

(12) # EUROPÄISCHE PATENTSCHRIFT

(45) Veröffentlichungstag der Patentschrift:
30.08.89

(21) Anmeldenummer: 85113893.3

(22) Anmeldetag: 31.10.85

(51) Int. Cl.⁴: **G 02 F   1/133, G 09 F   9/35**

(54) Flüssigkristallanzeige.

(30) Priorität: 13.04.85 DE 8510864 U

(43) Veröffentlichungstag der Anmeldung:
22.10.86 Patentblatt 86/43

(45) Bekanntmachung des Hinweises auf die Patenterteilung: 30.08.89 Patentblatt 89/35

(84) Benannte Vertragsstaaten:
AT BE CH DE FR GB IT LI LU NL SE

(56) Entgegenhaltungen:
EP--A-- 0 034 409
DE--A-- 2 824 359
DE--A-- 3 132 660
FR--A-- 2 463 471
GB--A-- 2 061 587

(73) Patentinhaber: Diemer & Fastenrath
Worthstrasse 16
D-5880 Lüdenscheid (DE)

(72) Erfinder: Möller, Ulrich
Grenzweg 11
D-5880 Lüdenscheid (DE)
Erfinder: Fastenrath, Heinz, Dipl.-Ing.
Annabergstrasse 45
D-5880 Lüdenscheid (DE)

(74) Vertreter: Dörner, Lothar, Dipl.-Ing.
Stresemannstrasse 15
D-5800 Hagen (DE)

## Beschreibung

Die Erfindung betrifft eine transflektive oder transmissive Flüssigkristallanzeige mit einer lichtleitenden Beleuchtungseinheit, die hinter der hinteren transparenten Platte der Flüssigkristallanzeige angeordnet ist.

Eine Flüssigkristallanzeige, auch Liquid Crystal Display, abgekürzt LCD genannt, ist eine bei elektronischen Geräten zur Darstellung von Buchstaben, Ziffern und Zeichen dienende Anzeigeeinheit. Bei der Flüssigkristallanzeige wird ein zwischen kristalliner und flüssiger Phase liegender Zwischenzustand ausgenutzt, um Zonen fadenförmiger Moleküle in einem elektrischen Feld definiert so zu beeinflussen, daß sich deren Lichtbrechung im Vergleich zum Umfeld ändert. Flüssigkristallanzeigen bieten gegenüber anderen Anzeigen den Vorteil der extrem leistungsarmen Ansteuerung.

Man unterscheidet reflektive, transflektive und transmissive Flüssigkristallanzeigen. Die reflektive Anzeige weist einen hinteren Polarisator mit hochreflektierendem Belag auf, der das von der Zelle hindurchgelassene Auflicht diffus reflektiert. Die transflektive Anzeige hat einen Reflektor, der zum Teil lichtdurchlässig ist. Das Auflicht der Umgebung wird zum größten Teil reflektiert; das von hinten eingestrahlte Durchlicht gelangt abgeschwächt durch den Transflektor und durch die Anzeige zum Betrachter. Die transmissive Anzeige reflektiert kein Auflicht; sie ist nur für Durchlicht geeignet.

Damit Flüssigkristallanzeigen auch bei Nacht abgelesen werden können, müssen sei beleuchtet werden. Bekannt ist aus der DE-A1-2 824 359 eine Anzeigevorrichtung, die aus einer Anzeigezelle und einer Beleuchtungseinheit besteht, die miteinander verklebt sind. Die Beleuchtungseinheit umfaßt eine einen Lishtleiter bildende Platte aus Kunststoffmaterial. Am Rand der Platte ist ein Hohlraum ausgespart, der eine elektrische Glühlampe als Lichtquelle aufnimmt. Zu der Beleuchtungseinrichtung gehört außerdem ein hinter der Platte angeordneter Spiegel aus Kunststoffmaterial. Diese Art der Beleuchtung hat wesentliche Nachteile : Es ergibt sich für die Gesamtanordnung eine relativ große Bauhöhe. Will man zu einer halbwegs gleichmäßigen Ausleuchtung der Flüssigkristallanzeige kommen, sind mehr als eine Glühlampe notwendig. Mit wachsender Zahl der Glühlampen geht der der Flüssigkristallanzeige innerwohnende Vorteil des geringen Leistungsbedarfs mehr und mehr verloren.

Für die Gruppe der transflektiven und transmissiven Flüssigkristallanzeigen will die Erfindung hier Abhilfe schaffen. Der Erfindung liegt die Aufgabe zugrunde, die Beleuchtung dieser Flüssigkristallanzeigen so auszugestalten, daß im Vergleich zur Dicke unbeleuchteter Flüssigkristallanzeigen keine Vergrößerung der Bauhöhe eintritt. Gemäß der Erfindung wird diese Aufgabe dadurch gelöst, daß als Bel-euchtungseinheit Lichtleitfasern vorgesehen sind, die hinter der hinteren transparenten Platte der Flüssigkristallanzeige vorgesehen, an den zu hinterleuchtenden Stellen zur Abgabe von Licht aktiviert, und an ein bis zwei Stirnseiten der Platten zu ein bis zwei Einkoppelstellen für das Licht gebündelt sind. Eine Lichtleitfaser im Sinne der Erfindung ist ein Endlosgarn auf der Basis von Methylmethacrylat mit Polyäthylenbeschichtung. Vor Ihrem Einsatz werden solche Lichtleitfasern konfektioniert, das heißt an den Stellen, an denen Buchstaben, Ziffern und Zeichen hinterleuchtet werden sollen, aktiviert. Solche Lichtleitfasern, die auch eine Leitermatte bilden können, werden unmittelbar hinter die hintere transparente Platte geklebt. Die Lichtleitfasern beanspruchen nur den Teil der Bauhöhe, der ohnedies für Steckerleisten, die die Steuerung der Zusätzliche Aufbauten sind nicht erforderlich.

Die mit der Erfindung zu erzielende Helligkeit ist zu vergrößern, wenn in Ausgestaltung der Erfindung die Lichtleitfaser mit einer Reflektorfolie hinterlegt ist. Alternativ oder zusätzlich können die Enden der Lichtleitfasern an zwei gegenüberliegenden Stirnseiten über die Flüssigkristallanzeige vorstehen und zu je einer Einkopplungsstelle gebündelt sein. Auf diese Weise ist es möglich, an zwei Stellen eine Lichtquelle anzuschließen.

In weiterer Ausgestaltung der Erfindung ist zwischen der hinteren transparenten Platte und den Lichtleitfasern wenigstens eine Streulichtfolie angeordnet. Eine solche Maßnahme kann einerseits die Vergleichmäßigung des durchscheinenden Lichts herbeiführen. - Dies ist auch bei Verwendung einer Leitermatte möglich -.

Schließlich ist es in Ausgestaltung der Erfindung möglich, dem durchscheinenden Licht - unterschiedliche - Farbe zu geben, sei es durch Einfärben der Streulichtfolie oder der Einkopplungsstellen, sei es durch Beaufschlagung der Einkopplungsstellen mit unterschiedlich farbigem Licht durch Verwendung farbiger Lampen oder farbiger Filter, sei es durch Verwendung eingefärbter Flüssigkristallanzeigen.

Ein Ausführungsbeispiel der Erfindung ist in der Zeichnung dargestellt und wird im folgenden näher beschrieben. Es zeigen :

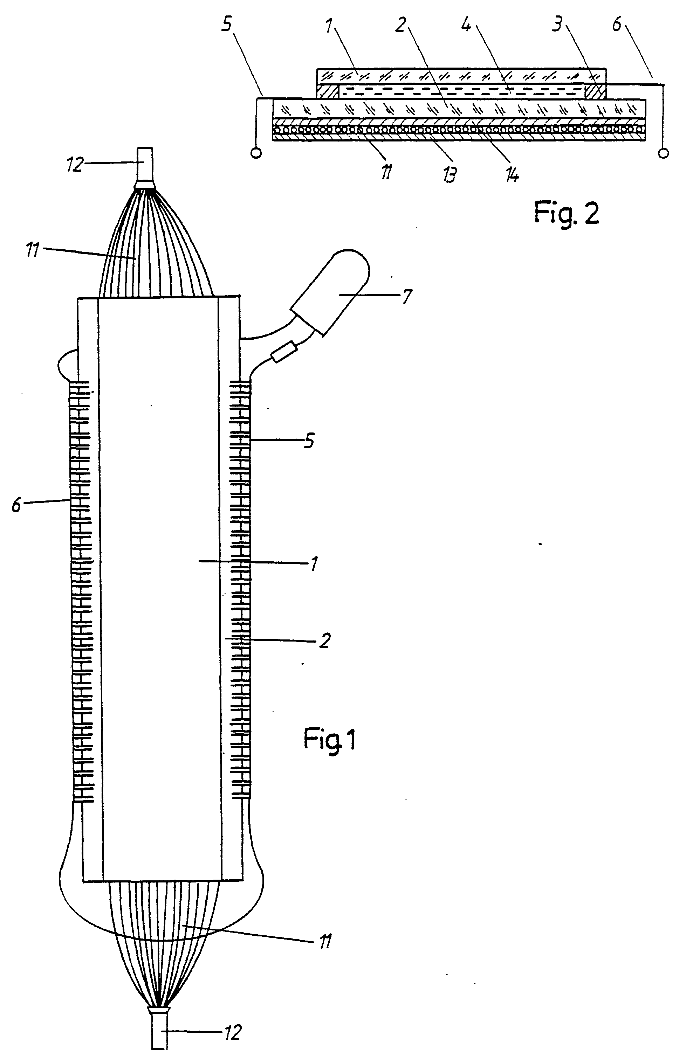

Fig. 1 die Ansicht einer transflektiven Flüssigkristallanzeige ;

Fig. 2 einen Querschnitt durch die Flüssigkristallanzeige, wobei aus Gründen der deutlicheren Darstellung das Verhältnis der Dicke der Folien, Platten und Leiter zu ihrer Breite vergrößert wurde.

Eine transflektive Flüssigkristallanzeige weist eine vordere leitfähige transparente Platte 1 und eine hintere leitfähige transparente Platte 2 auf. Die Platten 1 und 2 sind durch Abstandsstücke 3 auf Abstand gehalten. Zwischen den Platten 1 und 2 sowie den Abstandstücken 3 sind Flüssigkristalle 4 eingeschlossen. Die einander zugewandten Flächen der Platten 1 und 2 sind mit nicht dargestellten Elektroden belegt, die über Elektroden-Zuleitungen 5 und 6 versorgt werden.

Die Elektroden-Zuleitungen 5 und 6 münden in zwei Sammelleitungen, die in einem Stecker 7 zusammengefaßt sind.

Hinter der hinteren Platte 2 sind Lichtleitfasern 11 vorgesehen. Die Lichtleitfasern 11 sind parallel zueinander hinter die hintere Platte 2 geklebt. An den Stirnseiten der Platten 1, 2 sind die Lichtleitfasern 11 zu Einkopplungsstellen 12 zusammengefaßt. An diesen Einkopplungsstellen 12 wird jeweils eine nicht dargestellte Lichtquelle angebracht. An den zu hinterleuchtenden Stellen sind die Lichtleitfasern 11 aktiviert. Es reicht eine Einkopplungsstelle 12 aus ; bei der im Ausführungsbeispiel vorgesehenen Verwendung von zwei Einkopplungsstellen wird die Helligkeit der Hinterleuchtung verbessert.

Auf der der hinteren Platte 2 abgewandten Seite der Lichtleitfasern 11 ist eine Folie 13 vorgesehen. Die Folie 13 dient einmal der Abdeckung der Lichtleitfasern 11. Bevorzugt wird, diese Folie als Reflektorfolie auszubilden ; das heißt sie auf der den Lichtleitfasern 11 zugewandten Fläche so zu beschichten, daß das von den Lichtleitfasern 11 ausgehende Licht reflektiert wird.

Auf der der hinteren Platte 2 zugewandten Seite der Lichteiltfasern 11 ist eine Streulichtfolie 14 vorgesehen. Diese Streulichtfolie 14 dient ebenfalls der Vergleichmäßigung des durchscheinenden Lichts. Sie kann eingefärbt sein, um die Anzeigen farbig zu gestalten. Es ist möglich, entlang der Flüssigkristallanzeige unterschiedlich gefärbte Streulichtfolien vorzusehen oder eine Streulichtfolie unterschiedlich einzufärben, so daß man zum Beispiel alle sicherheitsrelevanten Informationen auf einen roten Teil der Flüssigkristallanzeige bringen kann.

Es ist auch möglich, über die beiden Einkopplungsstellen 12 unterschiedlich gefärbtes Licht einzugeben : Dies kann einmal dadurch geschehen, daß die Einkopplungsstellen 12 eingefärbt werden. Färbt man beispielsweise die eine Einkopplungsstelle grün, die ander Einkopplungsstelle rot, so kann mit einer Wechselschaltung der beiden die Einkopplungsstelle mit weißem Licht beleuchtenden Lampen die Flüssigkristallanzeige einmal grün, ein anderes Mal rot ausleuchten. Dies kann zum anderen dadurch geschehen, daß anstelle gefärbter Einkopplungsstellen farbige Lampen verwendet werden. Sendet die eine Lampe rotes, die andere grünes Licht aus, ist der vorstehend beschriebene Effekt erzielbar. Eine solche Anordnung Kann aber auch so ausgestaltet sein, daß man farbige Lampen mit monochromatischem Licht einsetzt, von denen die eine gelb, die andere blau eingefärbt ist, wonach man nicht nur durch eine Welchselschaltung einmal eine gelbe, zum anderen eine blaue Ausleuchtung der Flüssigkristallanzeige erzielt, sondern durch Einschalten beider Lampen eine grüne Ausleuchtung. Mit szwei Lampen könnten also drei Farben erzeugt werden.

In einer anderen Ausgestaltung sind zwischen den Einkopplungsstellen 12 und den zugeordneten Lampen farbige Filter eingebracht, die die geschilderten Effekte zu erzielen gestatten. Diese Filter können auch, falls die Temperatur der Lampen an der Einkopplungsstelle für den Kunststoff der Lichtleitfaser 11 zu hoch ist, Infrarotfilter sein. Schließlich ist es möglich, die geschilderten Effekte dadurch zu erzielen, daß eingefärbte Flüssigkristallanzeigen verwendet werden.

## Patentansprüche

1. Flüssigkristallanzeige mit einer lichtleitenden Beleuchtungseinheit, die hinter der hinteren transparenten Platte der Flüssigkristallanzeige angeordnet ist, dadurch gekennzeichnet, daß als Beleuchtungseinheit Lichtleitfasern (11) vorgesehen sind, die hinter der hinteren transparenten Platte (2) parallel zu dieser vorgesehen, an den zu hinterleuchtenden Stellen zur Abgabe von Licht aktiviert, und an ein bis zwei Stirnseiten der Platten (1, 2) zu ein bis zwei Einkoppelstellen (12) für das Licht gebündelt sind.

2. Flüssigkristallanzeige nach Anspruch 1, dadurch gekennzeichnet, daß die Lichtleitfasern (11) mit einer Reflektorfolie (13) hinterlegt sind.

3. Flüssigkristallanzeige nach Anspruch 1 oder 2, dadurch gekennzeichnet, daß die Enden der Lichtleitfasern (11) an zwei gegenüberliegenden Stirnseiten über die Flüssigkristallanzeige vorstehen und zu je einer Einkopplungesstelle (12) gebündelt sind.

4. Flüssigkristallanzeige nach einem der Ansprüche 1 bis 3, dadurch gekennzeichnet, daß zwischen der hinteren transparenten Platte (2) und den Lichtleitfasern (11) wenigstens eine Streulichtfolie (14) angeordnet ist.

5. Flüssigkristallanzeige nach Anspruch 4, dadurch gekennzeichnet, daß die Streulichtfolie (14) eingefärbt ist.

6. Flüssigkristallanzeige nach Anspruch 3, dadurch gekennzeichnet, daß über die Einkopplungsstellen (12) unterschiedlich farbiges Licht zugeführt ist.

7. Flüssigkristallanzeige nach Anspruch 3 oder 6, dadurch gekennzeichnet, daß die Einkopplungsstellen (12) von unterschiedlich farbigen Lampen beaufschlagt sind.

8. Flüssigkristallanzeige nach Anspruch 3 oder 6, dadurch gekennzeichnet, daß den Einkopplungsstellen (12) unterschiedlich farbige Filter vorgeordnet sind.

9. Flüssigkristallanzeige nach Anspruch 3 oder 6, dadurch gekennzeichnet, daß die Einkopplungsstellen (12) unterschiedlich eingefärbt sind.

10. Flüssigkristallen nach einem der Ansprüche 1 bis 3, dadurch gekennzeichnet, daß eingefärbte Flüssgkristallanzeigen verwendet sind.

## Claims

1. Liquid-crystal display having a photoconductive lighting unit disposed behind the rear transparent plate of the liquid-crystal display, characterised in that optical fibres (11) are used as the lighting unit, said optical fibres being disposed behind the rear transparent plate (2) and parallel therewith, activated at the points to be backlit for the emission of light, and bundled at one or two end faces of the plates (1, 2) into one or two bunching points (12) for the light.

2. Liquid-crystal display according to claim 1, characterised in that the optical fibres (11) are backed with a reflective foil (13).

3. Liquid-crystal display according to claim 1 or 2, characterised in that the ends of the optical fibres (11) project over the liquid-crystal display at two opposing end faces and are each bundled into a bunching point (12).

4. Liquid-crystal display according to one of claims 1 to 3, characterised in that at least one scattered-light foil (14) is disposed between the rear transparent plate (2) and the optical fibres (11).

5. Liquid-crystal display according to claim 4, characterised in that the scattered-light foil is of one single colour.

6. Liquid-crystal display according to claim 3, characterised in that light of different colours is directed via the bunching points (12).

7. Liquid-crystal display according to claim 3 or 6, characterised in that the bunching points (12) are acted upon by lamps of different colours.

8. Liquid-crystal display according to claim 3 or 6, characterised in that filters of different colours are disposed in front of the bunching points (12).

9. Liquid-crystal display according to claim 3 or 6, characterised in that the bunching points (12) are of different single colours.

10. Liquid-crystal display according to one of claims 1 to 3, characterised in that liquid-crystal displays of one single colour are used.

## Revendications

1. Affichage à cristaux liquides avec une unité d'éclairage par fibres optiques disposée derrière la plaque transparente arrière de l'affichage à cristaux liquides, caractérisé en ce qu'il comprend comme unité d'éclairage des fibres optiques (11) qui sont disposées derrière la plaque transparente arrière (2) et parallèlement à celle-ci, activées aux endroits devant être rétroéclairés pour émettre de la lumière et concentrées, sur une ou deux faces frontales des plaques (1, 2), en un à deux points de couplage (12) pour la lumière.

2. Affichage à cristaux liquide selon la revendication 1, caractérisé en ce que les fibres optiques (11) sont doublées d'une feuille réflectrice (13).

3. Affichage à cristaux liquides selon l'une des revendications 1 ou 2, caractérisé en ce que les extrémités des fibres optiques (11) dépassent de l'affichage à cristaux liquides sur deux faces frontales opposées et qu'elles sont concentrées en respectivement un point de couplage (12).

4. Affichage à cristaux liquides selon l'une des revendications 1 à 3, caractérisé en ce qu'au moins une feuille de diffusion (14) est disposée entre la plaque transparente arrière (2) et les fibres optiques (11).

5. Affichage à cristaux liquides selon la revendication 4, caractérisé en ce que la feuille de diffusion (14) est teintée.

6. Affichage à cristaux liquides selon la revendication 3, caractérisé en ce que de la lumière de différentes couleurs est amenée par l'intermédiaire des points de couplage (12).

7. Affichage à cristaux liquides selon l'une des revendications 3 ou 6, caractérisé en ce que les points de couplage (12) sont alimentés par des lampes de différentes couleurs.

8. Affichage à cristaux liquides selon l'une des revendications 3 ou 6, caractérisé en ce que des filtres de différentes couleurs sont placés en amont des points de couplage (12).

9. Affichage à cristaux liquides selon l'une des revendications 3 ou 6, caractérisé en ce que les points de couplage (12) présentent des colorations différentes.

10. Affichage à cristaux liquides selon l'une des revendications 1 à 3, caractérisé en ce qu'il utilise des affichages à cristaux liquides teintés.

Fig. 2

Fig 1